(19) Europäisches Patentamt
European Patent Office
Office européen des brevets

(11) EP 2 271 709 B1

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(21) Anmeldenummer: **09737968.9**

(22) Anmeldetag: **02.04.2009**

(51) Int Cl.:
***C08L 61/00*** (2006.01) ***C08K 5/353*** (2006.01)
***C08K 5/3492*** (2006.01) ***C08K 5/00*** (2006.01)

(86) Internationale Anmeldenummer:
**PCT/EP2009/053938**

(87) Internationale Veröffentlichungsnummer:
**WO 2009/132924 (05.11.2009 Gazette 2009/45)**

(54) **PHENOLHARZ-AUFWEISENDE POLYMERZUSAMMENSETZUNG**

POLYMER COMPOSITION COMPRISING PHENOLIC RESIN

COMPOSITION POLYMÈRE CONTENANT UNE RÉSINE PHÉNOLIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.04.2008 DE 102008001475**

(43) Veröffentlichungstag der Anmeldung:
**12.01.2011 Patentblatt 2011/02**

(73) Patentinhaber: **Evonik Degussa GmbH**
**45128 Essen (DE)**

(72) Erfinder:
- **OMEIS, Marianne**
**46286 Dorsten (DE)**
- **SALWICZEK, Kathrin**
**45768 Marl (DE)**
- **BAUER, Frank**
**verstorben (DE)**

(56) Entgegenhaltungen:
**EP-A- 0 816 346**
**WO-A-94/14867**
**WO-A-2005/047384**
**US-A- 4 839 446**
**US-A- 5 644 006**

Bemerkungen:
Die Akte enthält technische Angaben, die nach dem Eingang der Anmeldung eingereicht wurden und die nicht in dieser Patentschrift enthalten sind.

EP 2 271 709 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung beschreibt eine Phenolharz-aufweisende Polymerzusammensetzung.

E. A. Boulter et al. beschreiben in Electrical Insulation Conference, 1997, and Electrical Manufacturing & Coil Winding Conference Proceedings, Band 22-25 (September 1997), Seiten 249 - 253 die Eigenschaften oxazolin-modifizierter Phenolharze, wie beispielsweise die Haftung auf Kohlefasern, Glasfasern und Metallen, die Beständigkeit gegenüber thermooxidativem Abbau, die geringe Rauchentwicklung bei einem Brand, die geringe Entflammbarkeit und die hohe Schlagzähigkeit. Besonders wegen der geringen Entflammbarkeit eigen sich diese Polymere zur Herstellung von Bauteilen für die Flugzeugindustrie. Weitere Anwendungen sind im Bereich der elektrischen Isolierung und im Elektronikbereich zu finden. Gemäß E. A. Boulter eignen sich diese Precursor bzw. Prepolymere unter anderem auch für Spritzguss, Resin Transfer Moulding (RTM) und Prepregs.

Ein Batch-Verfahren zur Herstellung von oxazolin-modifizierter Phenolharze beschreiben Tiba et al. in US 4,699,970. Hierbei werden Oxazoline und Phenolharzen in Gegenwart von Phosphiten als Katalysatoren umgesetzt und anschließend gehärtet. Den Einsatz von Phosphinen als Katalysatoren beschreiben Goel et al. in der EP 0 284 880 A2.

Ein weiteres Batch-Verfahren zur Herstellung von oxazolin-modifizierten Phenolharzen beschreiben Culbertson et al. in US 5,302,687. Als Katalysatoren werden hierbei Tetraalkyl- bzw. Tetraarylammoniumsalze und -phosphoniumsalze beschrieben, wobei als Cokatalysatoren Alkylhalogenide eingesetzt werden.

Ebenfalls Culbertson et al. beschreiben in der US 4,806,267 ein Verfahren zur Herstellung einer niedrig schmelzenden Mischung (einem Schmelzpunkt von kleiner 100°C) bestehend aus aromatischen Bisoxazolinen und Bisoxazinen, wobei die Struktureinheit der Oxazoline oder Oxazine in einem Molekül enthalten ist. In der US 5,644,006 beschreiben Deviney et al. die Umsetzung eines Phenolharzes mit modifizierten Bisoxazolinen.

In Prog. Polym. Sci. 27 (2002) 579 - 626 beschreibt Culbertson die schrittweise Polymerisation von cyclischen Iminoethern, u.a. auch die Umsetzung von Oxazolinen mit Phenol-haltigen Verbindungen. Auch hier wird ein Batch-Verfahren beschrieben.

Die Eigenschaften von Polymeren hergestellt aus Bisoxazolinen und Phenolharzen beschreibt die Publikation Mat. Tech. 11.6:215-229.

Die EP 0 758 351 B1 beschreibt eine durch Energie polymerisierbare Zusammensetzungen, Homopolymere und Copolymere aus Oxazolinen, die als Initiator eine organometallische Verbindungen aufweisen. Diese Zusammensetzungen können vorzugsweise phenolische Verbindungen mit zwei oder mehr phenolischen Hydroxygruppen aufweisen.

Deviney et al. beschreiben in der US 5,616,659 ein mit Bisoxazolinen vernetzter Novolak, wobei Phosphorsäureestergruppen an die Polymerkette angebunden sind, um den Flammschutz des Polymers zu verbessern.

Um die thermooxidative Stabilität zu erhöhen, beschreiben Deviney et al. in der WO 98/05699 die Herstellung eines Polymers aus einem Phenolharz und Bisoxazolinen in Abwesenheit eines Katalysators. Um eine gleichmäßige Energiezufuhr in der Zusammensetzung aus Phenolharz und Bisoxazolin zu erzielen, wird die Zusammensetzung einem elektromagnetischen Feld ausgesetzt.

Es war die Aufgabe der vorliegenden Erfindung, eine Phenolharz-haltige Polymerzusammensetzung bereitzustellen, die geeignet ist, Werkstoffe mit einer verbesserten thermooxidativen Stabilität daraus herzustellen.

Überraschenderweise wurde gefunden, das eine Phenolharz-haltige Polymerzusammensetzung, die Stabilisatoren, insbesondere in Form von HALS-Verbindungen aufweist, geeignet ist, Reaktivpolymere als auch Werkstoffe mit einer verbesserten Langzeitstabilität bereitzustellen. Durch den Zusatz von HALS-Verbindungen kann die Versprödung durch Licht- und Wärmeeinfluss der Werkstoffe, die aus der erfindungsgemäßen Polymerzusammensetzung hergestellt werden können, zurückgedrängt werden. So kann eine nahezu konstante Zugdehnung und Reißdehnung dieser Werkstoffe erzielt werden.

Die erfindungsgemäße Polymerzusammensetzung kann beispielsweise dazu dienen mittels eines Extruders ein Reaktivpolymer herzustellen, das anschließend zur Herstellung von Verbundwerkstoffen weiter eingesetzt werden kann. Ferner kann diese Polymerzusammensetzung auch in einem Batch-Verfahren gemäß dem Stand der Technik zu einem Werkstoff umgesetzt werden.

Gegenstand der Erfindung ist eine Polymerzusammensetzung, dadurch gekennzeichnet, dass diese Polymerzusammensetzung

- eine Mischung (A) umfassend
  eine oder mehrere Verbindungen gemäß der Struktur (A1)

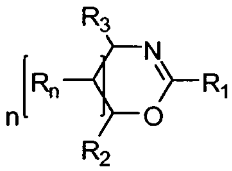

(A1)

mit $R_1$ = unsubstituierte Alkylgruppe mit 1 bis 6 C-Atomen,
$R_2$, $R_3$, $R_n$ = Wasserstoff, und/oder unsubstituierte Alkylgruppen mit 1 bis 6 C-Atomen,
n = 0, 1, 2, 3,
oder
eine oder mehrere Verbindungen gemäß der Struktur (A2)

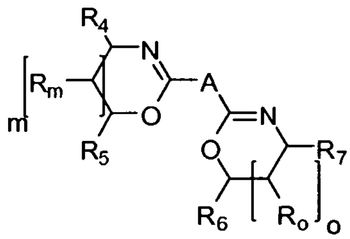

(A2)

mit A = unsubstituiertes Alkylen mit 1 bis 6 C-Atomen oder unsubstituiertes Phenylen,
$R_4$, $R_5$, $R_6$, $R_7$, $R_m$, $R_o$ = Wasserstoff, und/oder unsubstituierte Alkylgruppen mit 1 bis 6 C-Atomen,
m, o = 0, 1, 2, 3,
oder Mischungen aus einer oder mehreren Verbindungen gemäß der Struktur (A1) und (A2),
wobei die Substituenten vom Typ $R_1$, $R_2$, $R_3$, $R_4$, $R_5$, $R_6$, $R_7$, $R_n$, $R_m$ und $R_o$ gleich oder verschieden sowie substituiert oder unsubstituiert sein können und m und o gleich oder verschieden sein kann,

- zumindest ein Phenolharz (B) und
- zumindest einen Stabilisator (C), ausgewählt aus Verbindungen gemäß den folgenden Strukturen

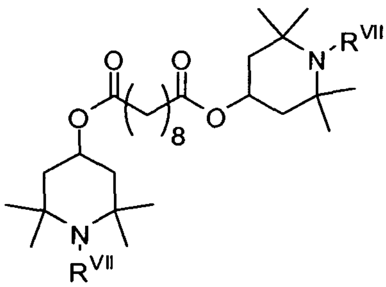

(2)

mit $R^{VII}$ = Wasserstoff, Alkyl- oder Alkoxygruppe,

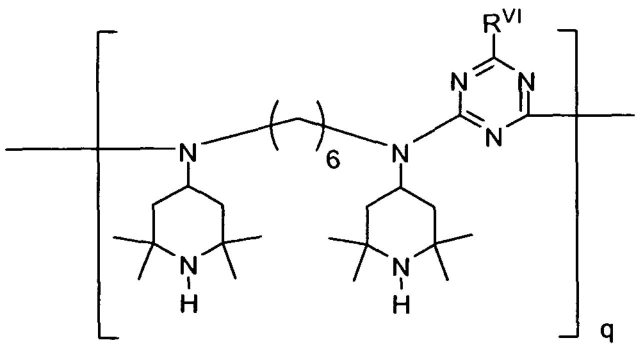

(3)

mit

$R^{VI}$ = 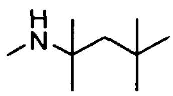 , 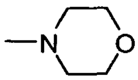 oder 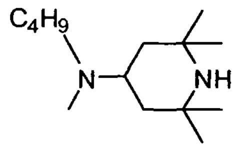

q = 2 bis 10
oder

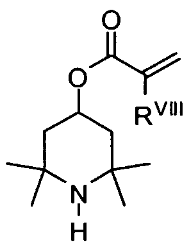

(4)

mit $R^{VII}$ = Wasserstoff oder Alkylgruppe.
oder
eine Polymer-bound-HALS-Verbindung gemäß der folgenden Struktur

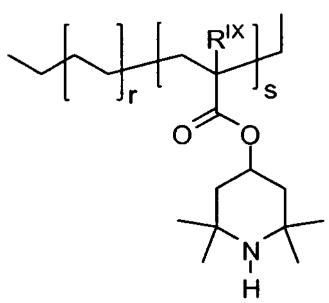

(5)

mit $R^{ix}$= Wasserstoff oder Alkylgruppe $r,s \geq 10$
und Antioxidantien gemäß Struktur (7),

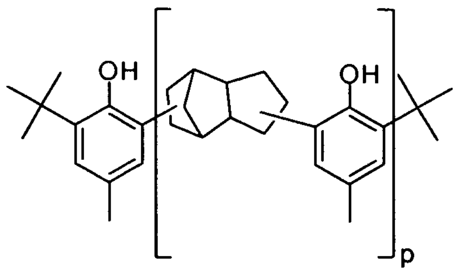

(7)

mit p = 1 bis 5,
aufweist.

Vorzugsweise weist die erfindungsgemäße Polymerzusammensetzung mindestens 5 Gew.-% an chemisch ungebundenen Verbindungen gemäß der Struktur (A1) und/oder (A2) bezogen auf die Polymerzusammensetzung auf. Chemisch ungebundene Verbindungen meint, dass die Verbindungen gemäß der Struktur (A1) und/oder (A2) nicht mit dem Phenolharz reagiert haben und somit frei in erfindungsgemäßen Polymerzusammensetzung vorliegen.

Der Anteil an chemisch ungebundenen Verbindungen gemäß der Struktur (A1) und/oder (A2) wird wie folgt ermittelt (beispielsweise für 1,3-Phenylenbisoxazolin):

15 g der Probe (Polymerzusammensetzung, beispielsweise gemäß Beispiel 1) werden in einer Extraktionshülse vorgelegt und 18 h mit Methanol unter Rückfluss extrahiert. 1 ml dieser methanolischen Lösung wird mit 10 ml Acetonitril und 1 ml HMDS (Hexamethyldisilazan) zur Derivatisierung versetzt und 1 h bei 100 °C erhitzt. Anschließend wird die Probe gaschromatographisch bzgl. der Flächenprozente für 1,3-Phenylenbisoxazolin untersucht.

Zur Umrechnung von Flächen- in Gewichtsprozent wird 1,3-Phenylenbisoxazolin (Reinheit 99, 8%) in folgender Weise zur Kalibrierung eingesetzt:

168,5 mg 1,3-Phenylenbisoxazolin (Reinheit 99,8 %) wird mit 10 ml Acetonitril und 1 ml HMDS versetzt, 1 h bei 100 °C getempert und anschließend ebenfalls gaschromatographisch untersucht.

Aus den Flächenprozentwerten der extrahierten Probe und der als Standard behandelten Probe kann unter Berücksichtigung der Einwaagen der Gehalt an freiem 1,3-Phenylenbisoxazolin in der Polymerzusammensetzung berechnet werden.

Der Gehalt an chemisch ungebundenen Verbindungen gemäß der Struktur (A1) und/oder (A2) beträgt in der erfindungsgemäßen Polymerzusammensetzung vorzugsweise mindestens 5 Gew.-%, bevorzugt von 8 bis 40 Gew.-%, besonders bevorzugt von 10 bis 35 Gew.-% bezogen auf die Polymerzusammensetzung .

Die erfindungsgemäße Polymerzusammensetzung lässt sich einfach zu einem technisch gut handhabenden Granulat verarbeiten, das sich ferner durch seine Homogenität auszeichnet. Weiterhin vorteilhaft ist die schnelle Härtung der erfindungsgemäßen Polymerzusammensetzung. Diese Polymerzusammensetzung ist insbesondere geeignet für die Herstellung von Werkstoffen, die sich durch eine hohe Wärmeformbeständigkeit, einer Glastemperatur von über 190 °C und außerordentliche Impacteigenschaften auszeichnen. Die erfindungsgemäße Polymerzusammensetzung kann sowohl für die Herstellung von Commodity-Bauteilen als auch für die Herstellung von Hochleistungsfaserverbundwerkstoffen eingesetzt werden. So zeichnen sich die aus der erfindungsgemäßen Polymerzusammensetzung hergestellten Werkstoffe durch ihre hohe Zähelastizität, ihren verbesserten elektrischen Eigenschaften und ihrer geringen bis keiner Freisetzung von Reaktionsprodukten, vor allem gegenüber den Werkstoffen aus Phenolharzen gemäß dem Stand der Technik aus. Ferner zeichnen sich diese Werkstoff durch ihre guten Eigenschaften hinsichtlich der internationalen "Fire, Smoke and Toxicity" (FST)-Vorschriften aus.

Wesentlicher Bestandteil der erfindungsgemäßen Polymerzusammensetzung sind die Verbindungen der Struktur (A1) und (A2), die entweder jeweils allein oder in Form einer Mischung eingesetzt werden können. Selbstverständlich können auch Mischungen unterschiedlicher Verbindungen der Struktur (A1) oder (A2) eingesetzt werden. Die Substituenten $R_1$ bis $R_7$ und $R_n$ bis $R_o$ umfassen Wasserstoff und/oder Alkylgruppen, wobei Alkylgruppen im Sinne der vorliegenden Erfindung lineare oder verzweigte, aliphatische oder cycloaliphatische Gruppen mit 1 bis 6 C-Atomen sind. Vorzugsweise handelt es sich bei den Alkylgruppen um lineare aliphatische Gruppen mit 1 bis 6 C-Atomen, insbesondere um Methyl-, Ethyl-, Propyl-, Butyl-Gruppen.

Die erfindungsgemäße Polymerzusammensetzung weist Verbindungen gemäß den Strukturen (A1) und/oder (A2) in der Mischung (A) auf, bei denen die Substituenten vom Typ $R_1$, $R_2$, $R_3$, $R_4$, $R_5$, $R_6$, $R_7$, $R_n$, $R_m$ und $R_o$ Wasserstoff und/oder unsubstituierte Alkylgruppen mit 1 bis 6 C-Atomen sind und das Strukturfragment A unsubstituiertes Alkylen mit 1 bis 6 C-Atomen oder unsubstituiertes Phenylen bedeutet. Bevorzugt weist diese Verbindungen gemäß den Strukturen (A1) und/oder (A2) mit n, m, o = 0 oder 1 auf. Ein Beispiel der vorgenannten Verbindungen (A1) ist 2-Ethyl-2-oxazolin.

In einer bevorzugten Ausführungsform der erfindungsgemäßen Polymerzusammensetzung weist diese eine Mischung (A) bestehend aus 100 Gew.-% einer oder mehrerer Verbindungen gemäß der Struktur (A2) auf, wobei m und o vorzugsweise 0 oder 1 sind. Insbesondere weist sie Verbindungen gemäß der Struktur (A2) auf, die als Strukturfragment A eine Phenylengruppe aufweisen, wie beispielsweise 1,3-Phenylenbisoxazolin oder 1,4-Phenylenbisoxazolin. Die erfindungsgemäße Polymerzusammensetzung kann eine Mischung (A) aufweisen, die Verbindungen gemäß der Struktur (A2) mit $m \neq o$ innerhalb derselben Verbindung (A2u) und/oder Verbindungen gemäß der Struktur (A2) mit m = o innerhalb derselben Verbindung (A2g) aufweist. So kann die erfindungsgemäße Polymerzusammensetzung beispielsweise eine Mischung (A) aufweisen, die nur Verbindungen mit m = 1 und o = 0 innerhalb derselben Verbindung (A2g) aufweist. Beispiele der vorgenannten Verbindungen der Struktur (A2) sind 1,3-Phenylenbisoxazolin und 1,4-Phenylenbisoxazolin.

Von Vorteil ist es jedoch, wenn die erfindungsgemäße Polymerzusammensetzung eine Mischung (A) aufweist, die sowohl Verbindungen gemäß der Struktur (A2) mit m und o = 1 innerhalb derselben Verbindung (A2g6) als auch Verbindungen gemäß der Struktur (A2) mit m und o = 0 innerhalb derselben Verbindung (A2g5) aufweist. Als Verbindungen gemäß der Struktur (A2g5) weist die erfindungsgemäße Polymerzusammensetzung vorzugsweise 1,3-Phenylenbisoxazolin oder 1,4-Phenylenbisoxazolin auf.

Bevorzugt weist die erfindungsgemäße Polymerzusammensetzung eine Mischung (A) auf, die
10 bis 90 Gew.-% an Verbindungen der Struktur (A2g6) und
90 bis 10 Gew.-% an Verbindungen der Struktur (A2g5),
besonders bevorzugt
30 bis 70 Gew.-% an Verbindungen der Struktur (A2g6) und
70 bis 30 Gew.-% an Verbindungen der Struktur (A2g5),
und ganz besonders bevorzugt
45 bis 55 Gew.-% an Verbindungen der Struktur (A2g6) und
55 bis 45 Gew.-% an Verbindungen der Struktur (A2g5),
aufweist.

Die erfindungsgemäße Polymerzusammensetzung weist vorzugsweise Phenolharze (B) auf, die durch Kondensation von Phenolen mit Aldehyden, insbesondere Formaldehyd, gewonnen werden. So kann die erfindungsgemäße Polymerzusammensetzung Phenolharze, ausgewählt aus dem Novolak- und/oder Resol-Typ, aufweisen. Besonders bevorzugt weist sie Novolake als Phenolharz (B) auf. Vorzugsweise weisen die eingesetzten Phenolharze (B) einen Gehalt an freiem Formaldehyd von weniger als 0,1 Gew.-% auf (Bestimmung gemäß DIN EN 120). Dies hat den Vorteil, dass keine Emissionen an Formaldehyd auftreten.

Vorzugsweise weist die erfindungsgemäße Polymerzusammensetzung die Mischung (A) und das Phenolharz (B) in einem Gewichtsverhältnis von Mischung (A) zu Phenolharz (B) vorzugsweise von 99:1 bis 1:99, bevorzugt von 90:10 bis 10:90, besonders bevorzugt von 75:25 bis 25:75 und ganz besonders bevorzugt von 45:55 bis 55:45 auf.

Ferner weist die erfindungsgemäße Polymerzusammensetzung als Stabilisatoren (C) insbesondere sogenannte HALS-Verbindungen (Hindered Amine Light Stabilizers), Derivate des 2,2,6,6-Tetramethylpiperidin-4-on, auf. Dies hat den Vorteil, dass dadurch die Langzeitstabilität des Reaktivpolymers verbessert werden kann. Die erfindungsgemäße Polymerzusammensetzung kann auch eine Mischung an verschiedenen HALS-Verbindungen aufweisen.

So weist die erfindungsgemäße Polymerzusammensetzung Stabilisatoren (C) gemäß den folgenden Strukturen (2) bis (4) auf:

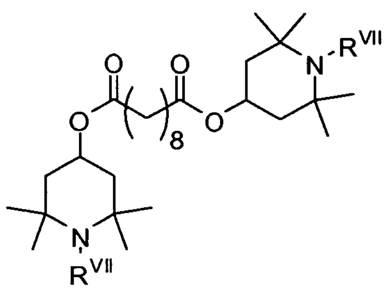

(2)

mit $R^{VII}$ = Wasserstoff, Alkyl- oder Alkoxygruppe,

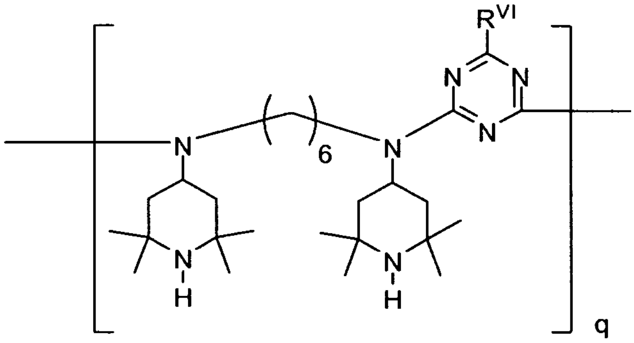

(3)

mit

$R^{VI}$ = 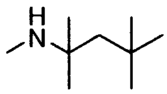 , 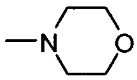 oder 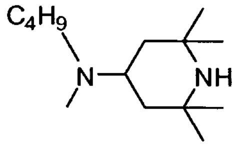

q = 2 bis 10,

oder

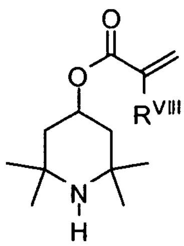

(4)

mit $R^{VIII}$ = Wasserstoff oder Alkylgruppe,
oder
eine Polymer bound-HALS-Verbindungen gemäß Struktur (5) auf

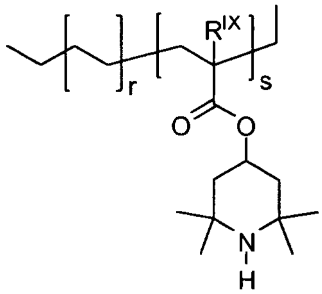

(5)

mit $R^{IX}$ = Wasserstoff oder Alkylgruppe und
r, s ≥ 1 0.

Bei diesen Polymer-bound-HALS-Verbindungen handelt sich um 2,2,6,6-Tetramethylpiperidin-4-on-Derivate, die an oder in einer Polymerkette eingebunden sind. Als Polymerkette eignen sich funktionalisierte Polyolefine, insbesondere Copolymere basierend auf Ethylen und Estern der (Meth)acrylsäure und ganz besonders bevorzugt Copolymere basierend auf Ethylen und Methacrylat. Besonders geeignete Beispiele an Polymer-bound-HALS-Verbindungen sind in EP 0 063 544 A1 offenbart, deren Inhalt in der vorliegenden Erfindung mit eingeschlossen ist.

Insbesondere weist die erfindungsgemäße Polymerzusammensetzung die Stabilisatoren (C) in einer Menge von 0,1 bis 2 Gew.-%, bevorzugt von 0,2 bis 1,5 Gew.-% und besonders bevorzugt von 0,3 bis 1,2 Gew.-% bezogen auf die Polymerzusammensetzung auf.

Die erfindungsgemäße Polymerzusammensetzung kann neben den Komponenten (A), (B) und (C) auch sowohl Lewis-Säuren als auch Lewis-Basen aufweisen. Diese Verbindungen dienen bei einer späteren Umsetzung als Katalysator. Vorzugsweise weist die erfindungsgemäße Polymerzusammensetzung Trialkyl- oder Triarylphosphite, bevorzugt Triphenylphosphit, auf.

In einer besonderen Ausführungsform der erfindungsgemäßen Polymerzusammensetzung kann diese auch Tetraalkyl- oder Tetraarylphosphoniumsalze, Tetraalkyl- oder Tetraarylammoniumsalze von Halogeniden, Tetrafluorborat, Hexafluorphosphat oder para-Toluolsulfonsäure als Katalysatoren aufweisen.

Diese Verbindungen, die bei einer späteren Umsetzung als Katalysator dienen können, weist die erfindungsgemäße Polymerzusammensetzung vorzugsweise in einer Menge von 0 bis 2 Gew.-% bezogen auf Polymerzusammensetzung, bevorzugt in einer Menge von 0,01 bis 1 Gew.-% und besonders bevorzugt in einer Menge von 0,01 bis 0,4 Gew.-%, auf.

Abhängig von der Verwendung der erfindungsgemäßen Polymerzusammensetzung kann es von Vorteil sein, dass die erfindungsgemäße Polymerzusammensetzung keinen Katalysator aufweist. Dies ist insbesondere bei Verwendungen der erfindungsgemäßen Polymerzusammensetzung zur Herstellung von Werkstoffen, bei denen bei einer thermischen Behandlung der Masseverlust so gering wie möglich sein sollte.

Die erfindungsgemäße Polymerzusammensetzung weist ferner das Reaktionsprodukt von 4-Methylphenol mit Dicyclopentadien und Isobuten gemäß Struktur (7),

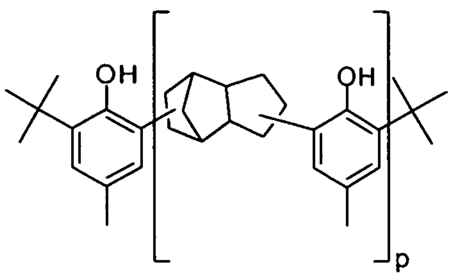

(7)

mit p = 1 bis 5.
als Antioxidants auf.

Diese Antioxidantien weist die erfindungsgemäße Polymerzusammensetzung vorzugsweise in einer Menge von 0,1 bis 2 Gew.-%, bevorzugt von 0,2 bis 1,5 Gew.-% und besonders bevorzugt von 0,3 bis 1,2 Gew.-% bezogen auf die Polymerzusammensetzung auf.

Es ist vorteilhaft, wenn die erfindungsgemäße Polymerzusammensetzung, zumindest einen Entlüfter aufweist. Als Entlüfter kann diese beispielsweise Silikonöle oder silikonmodifizierte Polyglycole und Polyether, schaumzerstörende Polysiloxane oder Polymere, polyethermodifizierte Polymethylalkylsiloxane aufweisen, wie sie beispielsweise von der Fa. Byk unter den Handelsnamen Byk®-A 506, Byk®-A 525, Byk®-A 530 oder Byk®-A 535 vertrieben werden. Der Zusatz eines Entlüfters hat den Vorteil, dass die Blasenbildung in dem später daraus hergestellten Werkstoff deutlich abgesenkt werden kann. Die erfindungsgemäße Polymerzusammensetzung weist den Entlüfter vorzugsweise von 0,1 bis 1 Gew.-% bezogen auf die Polymerzusammensetzung, bevorzugt von 0,2 bis 0,8 Gew.-% und besonders bevorzugt von 0,3 bis 0,7 Gew.-%, auf.

Eine mögliche Anwendung der erfindungsgemäßen Polymerzusammensetzung ist beispielsweise auch die Herstellung von Schäumen, hierfür ist es von Vorteil, wenn die erfindungsgemäße Polymerzusammensetzung Treibmittel anstelle des Entlüfters aufweist. Als Treibmittel kann die erfindungsgemäße Polymerzusammensetzung vorzugsweise organische Lösungsmittel, bevorzugt Methanol, aufweisen. Das Treibmittel weist die erfindungsgemäße Polymerzusammensetzung vorzugsweise in einer Menge von 0,5 bis 5 Gew.-% bezogen auf die Polymerzusammensetzung auf.

Vorteilhaft ist es ferner, wenn die erfindungsgemäße Polymerzusammensetzung zumindest ein Trennmittel

aufweist, dadurch kann die Handhabung der Polymerzusammensetzung bei Formgebungsverfahren verbessert werden. Vorzugsweise weist die erfindungsgemäße Polymerzusammensetzung Trennmittel, ausgewählt aus

- Silikonen, beispielsweise in Form von Ölen, Ölemulsionen in Wasser, Fetten und Harzen,
- Wachsen, beispielsweise natürliche und synthetische Paraffine mit und ohne funktionelle Gruppen,
- Metallseifen bzw. Metallsalzen von Fettsäuren, wie beispielsweise Calcium-, Blei-, Magnesium-, Aluminium- und/oder Zinkstearat,
- Fetten,
- Polymere, beispielsweise Polyvinylalkohol, Polyester und Polyolefine,
- Phosphorsäuremonoester,
- Fluorkohlenwasserstoffen und/oder
- anorganische Trennmittel, wie beispielsweise Graphit-, Talk- und Glimmerpuder

auf.

Als Trennmittel weist die erfindungsgemäße Polymerzusammensetzung bevorzugt interne Trennmittelsysteme auf, die den Einsatzstoffen zugegeben werden und sich - vor allem beim Formgebungsprozess entweder an der Oberfläche des Formteils anreichern oder eine schnellere Aushärtung der Oberfläche bewirken können, so dass es zwischen Formenwand und Formteil zu keinem Verbund kommen kann. Insbesondere weist die erfindungsgemäße Polymerzusammensetzung Trennmittel der Fa. Acmos Chemie KG auf, die unter den Handelsnamen ACMOSAL® 82-837, ACMOSAL® 82-847, ACMOSAL® 82-860, ACMOSAL® 82-866, ACMOSAL® 82-9018, ACMOSAL® 82-853 vertrieben werden. Das Trennmittel ist in der erfindungsgemäßen Polymerzusammensetzung besonders bevorzugt in einer Menge von 0,1 bis 2 Gew.-%, ganz besonders bevorzugt von 0,2 bis 1,5 Gew.-% bezogen auf die Polymerzusammensetzung enthalten.

Ferner kann die erfindungsgemäße Polymerzusammensetzung auch Netzmittel, vorzugsweise Tenside, bevorzugt ethoxylierte Fettalkohole oder Natriumlaurylsulfat, aufweisen, bevorzugt in einer Menge von 0,1 bis 2 Gew.-% bezogen auf die Polymerzusammensetzung.

Des Weiteren kann die erfindungsgemäße Polymerzusammensetzung auch Flammschutzmittel, wie beispielsweise halogenierte organische Verbindungen oder organische Phosphorverbindungen aufweisen. Bevorzugt weist sie organische Phosphorverbindungen, insbesondere Diphenylkresylphosphat oder Ammoniumpolyphosphate, auf. Das Flammschutzmittel ist vorzugsweise in einer Menge von 1 bis 30 Gew.-%, bevorzugt von 2 bis 15 Gew.-% und besonders bevorzugt von 5 bis 10 Gew.-% bezogen auf die Polymerzusammensetzung enthalten. Bevorzugt weist es Flammschutzmittel der Fa. Clariant, die unter dem Handelsnamen Exolit® AP, insbesondere Exolit® 263, Exolit® 442, Exolit® 454, Exolit® 455, Exolit® 470, Exolit® AP 420, Exolit® AP 422, Exolit® AP 423, Exolit® AP 462, Exolit® AP 740, Exolit® AP 751, Exolit® AP 760, vertrieben werden, auf.

Die erfindungsgemäße Polymerzusammensetzung kann neben den bereits genannten Additiven noch weitere Additive bzw. Zuschlagsstoffe aufweisen, wie beispielsweise:

- Thioxotrophiermittel, beispielsweise pyrogene Kieselsäuren, bevorzugt Aerosile,
- Füllstoffe und Pigmente, beispielsweise Titandioxid,
- Nanopartikel, beispielsweise Schichtsilikate, insbesondere Natrium-Lithium-Magnesiumsilikate, wie sie beispielsweise von der Fa. Rockwood unter dem Handelsnamen Laponite® S482 vertrieben werden,
- Kupplungsreagenzien, beispielsweise Silane, vorzugsweise N-Cycloalkylaminoalkylalkyldialkoxysilane, bevorzugt N-Cyclohexylaminomethylmethyldiethoxysilan, vertrieben unter dem Handelsnamen Geniosil® XL 924 von der Fa. Wacker Chemie AG,
- Flexibilisierungsmittel, wie beispielsweise Glykole,
- Low-profile-Additive, beispielsweise Thermoplaste, bevorzugt Polyvinylacetate, wie sie von der Fa. Wacker Chemie AG unter dem Handelsname Vinnapas® B 60 sp vertrieben werden,
- Additive zur Steigerung der elektrischen Leitfähigkeit, beispielsweise Calciumsilikat,
- Photoinitiatoren, vorzugsweise $\alpha$-Hydroxyketone, bevorzugt 2-Hydroxy-2-methyl-1-propan-1-on, besonders bevorzugt Darocure® 1173 der Fa. Ciba,
- lichtabsorbiernde Additive, vorzugsweise 2,4-Bis(2,4-dimethylphenyl)-6-(2-hydroxy-4-isooctyloxyphenyl)-1,3,5-triazine, wie beispielsweise CYASORB® UV-1164L der Fa. Cytec Industries Inc. und/oder
- Antistatika.

In einer weiteren bevorzugten Ausführungsform weist die erfindungsgemäße Polymerzusammensetzung zusätzlich einen Reaktiwerdünner auf. Hierbei handelt es sich üblicherweise um niedermolekulare, ethylenisch ungesättigte Verbindungen zur Viskositätserniedrigung. In der Regel handelt es sich hierbei um Acrylat- oder Methacrylathaltige Stoffe, die bei Raumtemperatur flüssig sind und damit in der Lage sind, die Gesamtviskosität der Formulierung herabzusetzen. Beispiele für solche Produkte sind insbesondere Isobornylacrylat, Hydroxypropylmethacrylat, Trimethylolpropanformalmonoacrylat, Tetrahydro-fufurylacrylat, Phenoxyethylacrylat, Trimethylenpropantriacrylat, Dipropylenglycoldiacrylat, Tripropylenglycoldiacrylat, Hexandioldiacrylat, Pentaerythrittetraacrylat, Laurylacrylat sowie propoxilierte oder ethoxylierte Varianten dieser Reaktiwerdünner und/oder urethanisierte Reaktiwerdünner wie EBECRYL® 1039 (Cytec) und andere. Außerdem in Frage kommen auch andere flüssige Komponenten, die in der Lage sind, unter Bedingungen der radikalischen Polymerisation mit zu reagieren, z. B. Vinylether oder Allylether. Alternativ können Epoxidharze als Reaktiwerdünner eingesetzt werden. Vorzugsweise handelt es sich bei den in der vorliegenden Erfindung eingesetzten Reaktiwerdünnern um Araldit® LY 1135-1 A Harz (Epoxyharz der Firma Huntsman Advanced Materials (Europe) BVBA). Der Anteil der Reaktivverdünner beträgt 0,1 bis 20 Gew.-%, vorzugsweise 1 bis 5 Gew.-%, bezogen auf die erfindungsgemäße Polymerzusammensetzung. Durch den Zusatz der Reaktivverdünner kann die Viskosität der Polymerzusammensetzung eingestellt, vorzugsweise verringert werden.

In einer besonders bevorzugten Ausführungsform der erfindungsgemäßen Polymerzusammensetzung weist diese zumindest ein Entlüfter und zumindest ein Trennmittel auf.

Die erfindungsgemäßen Polymerzusammensetzungen können nach allen dem Fachmann bekannten Arten hergestellt werden. So können sie durch Batch-Verfahren hergestellt werden, wie beispielsweise durch Culbertson et al. in US 5,302,687 beschrieben.

Im Falle der Batch-Verfahren werden die Ausgangskomponenten im einfachsten Falle in einem geeigneten Reaktionsgefäß zur Reaktion gebracht, insbesondere unter Einfluss von Wärme. So beträgt die Reaktionstemperatur insbesondere 140 bis 180°C, bevorzugt 160 bis 170°C. Die Reaktionszeit kann frei variiert werden und liegt insbesondere bei 5 bis 20, vorzugsweise bei 10 bis 15 Min. Die Zugabe der Mischungspartner kann frei gewählt werden, insbesondere die Reihenfolge von Phenolharz (B) und Mischung (A).

Alternativ lassen sich die erfindungsgemäßen Polymerzusammensetzungen auch durch kontinuierliche Verfahren herstellen, beispielsweise kontinuierlich in einem Extruder, Strömungsrohr, Intensiv-Kneter, Intensiv-Mischer oder statischen Mischer. Die Reaktionsparameter können hierbei grundsätzlich frei gewählt werden, insbesondere erfolgt die Herstellung der erfindungsgemäßen Polymerzusammensetzungen in den genannten Aggregaten durch intensive Durchmischung und kurzzeitige Reaktion, vorzugsweise bei Wärmezufuhr. Intensive Durchmischung und kurzzeitige Reaktion bei Wärmezufuhr bedeutet, dass die Verweilzeit der Einsatzstoffe in den oben genannten Aggregaten üblicherweise 3 Sekunden bis 15 Minuten, bevorzugt 3 Sekunden bis 5 Minuten, besonders bevorzugt 5 bis 180 Sekunden beträgt. Die Reaktanden werden dabei vorzugsweise bei Temperaturen von 100°C bis 275°C, bevorzugt von 150°C bis 200°C, ganz besonders bevorzugt von 170°C bis 190°C zur Reaktion gebracht. Je nach Art der Einsatzstoffe und der Endprodukte können diese Werte für Verweilzeit und Temperatur jedoch auch andere bevorzugte Bereiche einnehmen.

Gegebenenfalls kann eine kontinuierliche Nachreaktion nachgeschaltet werden. Durch eine anschließende, vorzugsweise schnelle, Abkühlung gelingt es dann, das Endprodukt zu erhalten. Schnelle Ankühlung im Sinne der vorliegenden Erfindung bedeutet, dass die Temperatur innerhalb von weniger als 60 Sekunden um mehr als 50°C abnimmt. Die Schmelze wird beispielsweise mit einer Austrittstemperatur von 120°C über z. B. ein wasser- oder luftgekühltes Metallband abgefahren. Die Temperatur des Kühlbandes beträgt vorzugsweise 0 bis 23°C, bevorzugt Raumtemperatur. Die schnelle Abkühlung hat den Vorteil, dass dadurch Nachreaktionen in der Polymerschmelze unterbunden werden und außerdem eine Granulierung möglich ist.

Als Aggregate sind Extruder wie Ein- oder Mehrschneckenextruder, insbesondere Zweischneckenextruder, Planetwalzenextruder oder Ringextruder, Strömungsrohr, Intensiv-Kneter, Intensiv-Mischer, wie beispielsweise Turrax-Mischer, oder statische Mischer für das bevorzugte Herstellungsverfahren besonders geeignet und werden bevorzugt verwendet. In einer besonderen Ausführungsform des Herstellungsverfahrens können auch Mehrwellenextruder, wie beispielsweise Ringextruder, eingesetzt werden. Besonders bevorzugt sind Mehrschneckenextruder, insbesondere Zweischneckenextruder, und Mehrwellenextruder, insbesondere Ringextruder. Ganz besonders bevorzugt sind Zweischneckenextruder.

Überraschend ist es, dass die Umsetzung, die im diskontinuierlichen Verfahren bis zu einer Stunde benötigt, in den vorab genannten Aggregaten, wie beispielsweise in einem Extruder oder Intensivkneter, in einigen Sekunden abläuft. Die kurzzeitige thermische Belastung im Zusammenspiel mit der Mischwirkung des Extruders ist in dem Herstellungsverfahren ausreichend, um die Reaktionspartner in dem gewünschten Grad vollständig oder weitestgehend umzusetzen. Die Extruder oder Intensivkneter ermöglichen durch geeignete Bestückung der Mischkammern bzw. Zusammenstellung der Schneckengeometrien intensive rasche Durchmischung bei gleichzeitigem intensivem Wärmeaustausch. Andererseits ist auch eine gleichmäßige Durchströmung in Längsrichtung mit möglichst einheitlicher Verweilzeit gewährleistet. Außerdem ist es vorteilhaft, wenn eine unterschiedliche Temperierung in den einzelnen Gerätegehäusen- oder abschnitten möglich ist.

Weitere Vorteile des kontinuierlichen Herstellungsverfahrens sind neben der guten Durchmischung mittels des Extruders eine exakte Dosierung der Komponenten und die genaue Einstellbarkeit der Reaktionszeit. Auf diese Weise erhält man eine Polymerzusammensetzung, die sich deutlich einfacher aufarbeiten lässt als eine Polymerzusammensetzung hergestellt mittels eines Batchverfahrens. Ferner handelt sich es bei dem bevorzugten kontinuierlichen Herstellungsverfahren um einen wirtschaftlich attraktiven Prozess, unter anderem da es sich um ein kontinuierliches Verfahren handelt, bei dem die Verfahrensparameter genau definiert werden können. Ein Scale-Up-Prozess sollte sich daher relativ einfach gestalten.

Die Einsatzstoffe werden den Aggregaten in der Regel in getrennten Produktströmen zudosiert. Bei mehr als zwei Produktströmen können diese auch gebündelt zugeführt werden. Hydroxygruppen-haltige amorphe und/oder kristalline Polymere können zu einem Produktstrom zusammengefasst werden. Es ist auch möglich, diesem Produktstrom zusätzlich Katalysatoren und/oder Additive, wie beispielsweise Verlaufmittel, Stabilisatoren, Flammschutzmittel, Entlüfter oder Haftvermittler, zuzufügen. Die Stoffströme können auch geteilt werden und so in unterschiedlichen Anteilen an verschiedenen Stellen den Aggregaten zugeführt werden. Auf diese Weise können gezielt Konzentrationsgradienten eingestellt werden, wodurch die Vollständigkeit der Reaktion herbeiführt werden kann. Die Eintrittsstelle der Produktströme kann in der Reihenfolge variabel und zeitlich versetzt gehandhabt werden.

Zur Vorreaktion und/oder Vervollständigung der Reaktion können mehrere Aggregate auch kombiniert werden.

Die der Reaktion nachgeschalteten Abkühlung wird, wie vorab beschrieben, bevorzugt schnell durchgeführt und kann in dem Reaktionsteil integriert sein, in Form einer mehrgehäusigen Ausführungsform wie bei Extrudern oder Conterna-Maschinen. Eingesetzt werden können außerdem: Rohrbündel, Rohrschlangen, Kühlwalzen, Luftförderer und Transportbänder aus Metall.

Die Konfektionierung kann je nach Viskosität der das Aggregat oder die Nachreaktionszone verlassenden Polymerzusammensetzung zunächst durch weitere Abkühlung mittels entsprechender vorgenannter Gerätschaften auf eine geeignete Temperatur gebracht werden. Dann erfolgt vorzugsweise die Pastillierung oder aber eine Zerkleinerung in eine gewünschte Partikelgröße mittels Walzenbrecher, Stiftmühle, Hammermühle, Schuppwalzen oder Ähnlichem.

Ferner ist Gegenstand dieser Erfindung die Verwendung der erfindungsgemäßen Polymerzusammensetzung zur Herstellung von Werkstoffen, insbesondere von Verbundwerkstoffen, besonders bevorzugt von Faserverbundwerkstoffen. Neben der Verwendung zur Herstellung von Verbundwerkstoffen kann die erfindungsgemäße Polymerzusammensetzung auch zur Herstellung von Kunststoffen eingesetzt werden. Diese hergestellten Kunststoffe weisen vorzugsweise eine Glastemperatur $T_g$ von mindestens 190°C und bevorzugt von mindestens 200°C auf, bevorzugt sind diese Werkstoffe formaldehydfrei.

Je nach Art der Verwendung kann die erfindungsgemäße Polymerzusammensetzung zunächst in handelsüblichem Lösemittel, insbesondere Ketone, gelöst werden.

In der erfindungsgemäßen Verwendung der oben beschriebenen Polymerzusammensetzung können anorganische Verstärkungsfasern, wie beispielsweise Glasfasern, organische Verstärkungsfasern, wie beispielsweise Aramidfasern oder Kohlenstofffasern, metallische Verstärkungsfasern oder Naturfasern eingesetzt werden. Die Verstärkungsfasern können hierbei in Form von Geweben, Gelegen, Multiaxialgelegen, Vliesen, Gestricke, Geflechte oder Matten eingesetzt werden.

Die oben beschriebene Polymerzusammensetzung wird bei der erfindungsgemäßen Anwendung als Matrix eingesetzt. So kann diese Polymerzusammensetzung beispielsweise zur Herstellung von vorimprägnierten Halbzeugen, wie beispielsweise Sheet Molding Compound (SMC) oder Bulk Molding Compound (BMC), eingesetzt werden. Pre-Forming kann ebenfalls zur Herstellung des Halbzeugs in der erfindungsgemäßen Anwendung eingesetzt werden.

Die Verarbeitung dieser Polymerzusammensetzung mit Verstärkungsmaterialen zu Verbundwerkstoffen kann durch eine Vielzahl von Verfahren / Technologien gemäß dem Stand der Technik erfolgen. Insbesondere erfolgt die Herstellung des Verbundwerkstoffes mittels einem der nachfolgend gelisteten Technologien:

- Laminieren bzw. auch Handlaminieren,
- Prepreg-Technologie,
- Spritzpressen (Resin Transfer Molding, RTM),
- Infusionsverfahren, wie beispielsweise dem Resin Infusion Molding (RIM) oder dem Seeman Composites Resin Infusion Process (SCRIMP),
- Wickelverfahren,
- Pultrusionsverfahren oder
- Faserlegeverfahren.

Die Härtung dieser Polymerzusammensetzung kann in der erfindungsgemäßen Anwendung mittels Temperaturzuführung, beispielsweise in einem Ofen, in einem Autoklaven oder in einer Presse, oder auch mittels Mikrowelle erfolgen.

Die mittels der erfindungsgemäßen Anwendung hergestellten Verbundwerkstoffe können insbesondere im Bereich der Luftfahrtindustrie, des Transportwesens, wie beispielsweise Automobilindustrie, und der Elektroindustrie eingesetzt werden. Auch können diese Verbundwerkstoffe in Windkraftanlagen, Rohren oder Behältern in Form von Tanks oder Druckkesseln eingesetzt werden.

Die Polymerzusammensetzung kann auch für die Herstellung von Leichtbaustrukturen eingesetzt werden,

insbesondere in Kombination mit Mehrschichtaufbauten, wie beispielsweise Waben oder Schäumen auf der Basis von Phenolharz, Polyimid, Glas, Polyurethan, Polyamid oder Polyvinylchlorid.

Der Einsatz der Polymerzusammensetzung in Werkstoffen führt insbesondere zu Bauteilen mit einer hohen Wärmeformbeständigkeit und einer hohen Glastemperatur $T_g$. Vorteilhaft ist auch die hohe Zähelastizität dieser Polymerzusammensetzung, die zu verbesserten Impacteigenschaften führt.

Weitere Anwendungsfelder für die Polymerzusammensetzung bzw. den daraus resultierenden Werkstoffen sind beispielsweise als Schleifmittel, feuerfeste Erzeugnisse, in der Gießereiindustrie, als Batterieseparatoren, im Druck- und Spritzguss, Mineralwolle (u.a. aus Glas, Stein oder Basalt (formaldehydfrei)), zur Papierimprägnierung, in Laminaten basierend aus Glas oder Papier für Elektroisolationen, zur Herstellung von Schäumen, Beschichten von Glas oder Metall, beispielsweise als Kabelschutz, Gummimischungen als Ersatz für Novolak als separate Phase und Co-Reaktant mit anderen Duromeren, wie beispielsweise Bismaleinimid.

Die nachfolgenden Beispiele sollen die erfindungsgemäße Polymerzusammensetzung näher erläutern, ohne dass die Erfindung auf diese Ausführungsform beschränkt sein soll.

**Beispiel 1 (Vergleichsbeispiel)**

Es wurde mit zwei Stoffströmen gearbeitet. Der Stoffstrom 1 bestand aus einer Mischung von 50,7 Gew.-% eines Phenolharzes (Durez® 33100 der Fa. Sumitomo-Bakelite) und 49,3 Gew.% 1,3-Phenylenbisoxazolin und der Stoffstrom 2 bestand aus Triphenylphosphit (0,98 Gew.-% Triphenylphosphit bezogen auf die Gesamtrezeptur).

Der eingesetzte Extruder- ein Zweischneckenextruder vom Typ DSE25 (Brabender GmbH) - bestand aus acht Gehäusen, die separat beheizt und gekühlt werden konnten. So betrug die Soll-Temperatur in Gehäuse 1 30°C, in Gehäuse 2 100°C, in Gehäuse 3-7 180°C und in Gehäuse 8 und dem Kopfteil 160°C. Die Regelung der Temperaturen erfolgte über eine Elektroheizung bzw. Wasserkühlung. Die Schneckendrehzahl betrug 280 UpM.

Der Stoffstrom 1 wurde als Pulvermischung mit einer Menge von 3,00 kg/h in das Gehäuse 1 des Extruders eingespeist, während der Stoffstrom 2 in das Gehäuse 3 des Extruders in einer Menge von 29,6 g/h eingespeist wurde, wobei der Stoffstrom Raumtemperatur hatte.

Die austretende Schmelze wurde über ein Kühlband abgefahren und anschließend gemahlen.

An der erstarrten Schmelze der Polymerzusammensetzung wird die Charakterisierung vorgenommen:

Ermittlung der Glastemperatur $T_g$

Die Glastemperatur wurde mittels der Dynamische Differenzkalorimetrie (Differential Scanning Calorimetry-DSC- nach DIN 53765) ermittelt, die Konditionierung der Probe erfolgte folgendermaßen:

- Aufheizen von Raumtemperatur auf 150°C und eine Stunde halten,
- Abkühlen auf Raumtemperatur
- Aufheizen auf 250°C und zwei Stunden halten
- Abkühlen auf Raumtemperatur
- Aufheizen auf 300°C - ohne Haltezeit

Bestimmung der Hydroxylzahl

Hydroxylzahl ist diejenige Menge Kaliumhydroxid in Milligramm, die der bei Acetylierung von 1 g Substanz gebundenen Menge an Essigsäure äquivalent ist.

Blindwertbestimmung (Doppelbestimmung)

10 ml Acetylierungslösung (Essigsäureanhydrid - 10 % in Tetrahydrofuran) und 30 ml Katalysatorlösung (4-N-Dimethylaminopyridin - 1 % in Tetrahydrofuran) werden in einem 100 ml Erlenmeyerkolben vorlegt, mit einem Stopfen verschlossen und 30 Minuten bei Raumtemperatur gerührt. Anschließend werden 3 ml Wasser zugegeben und nochmals 30 Minuten gerührt. Dieser Ansatz wird in den Titrinobecher gegeben und mit ca. 4 ml Tetrahydrofuran der Erlenmeyerkolben nachgespült, anschließend wird titriert (Titrino Basic 794 mit einer Elektrode vom Typ LL Solvotrode 6.0229.100 für nicht wässrige Medien).

Hydroxylzahl-Bestimmung der Probe

Die Probe (ca. 1 g) wird in einen 100 ml Erlenmeyerkolben eingewogen und mit 10 ml Acetylierungslösung unter Rühren innerhalb von ca. 5 Minuten gelöst. Anschließend werden 30 ml Katalysatorlösung zugegeben und 30

Minuten bei Raumtemperatur gerührt. Danach werden 3 ml entionisiertes Wasser zugeben und nochmals weitere 30 Minuten gerührt. Dieser Ansatz wird in den Titrinobecher gegeben und mit ca. 4 ml Tetrahydrofuran der Erlenmeyerkolben nachgespült, anschließend wird diese Probe titriert. Der Äquivalenzpunkt liegt bei dem verwendeten Gerät bei ca. 200 mV, wobei bei Phenolharz-haltigen Proben mehrere Endpunkte auftreten können.

Berechnung der Hydroxylzahl

$$\text{Hydroxylzahl} = ((B - A) \times C \times 56{,}1)/E + SZ$$

mit

A Verbrauch an KOH-Lösung (Kalilauge 0,5 N in Ethanol) bei der Titration der Probe in ml
B Verbrauch an KOH-Lösung beim Blindwert in ml
C Konzentration der KOH-Lösung in mol/l
E Einwaage an Probe in g
SZ Säurezahl der Probe in mg KOH/g

Ermittlung der Säurezahl durch separate Bestimmung

1,5 bis 2 g werden in 20 ml Dimethylformamid (DMF) gelöst, mit 80 ml Isopropanol versetzt und anschließend nach DIN EN 12634 titriert.

- Die Hydroxylzahl beträgt 249 mg KOH/g.
- Die Viskosität wurde mittels eines Kegel-Platte-Viskosimeters (DIN 53019-1) ermittelt und beträgt 4365 mPas/160°C.

Charakterisierung des ausgehärteten Polymerzusammensetzung:

- Die Glastemperatur $T_g$ liegt bei 202°C (DIN 53765).

**Beispiel 2 (Vergleichsbeispiel)**

Die Prüfkörper werden mit einem Matrixharz im Verbund mit einem Kohlenstofffasergewebe der Fa. ECC, Style 452 entsprechend der ISO 1268 hergestellt und die Zugprüfung wurde gemäß DIN EN ISO 14129 durchgeführt. Als Matrixharz werden verschieden
Polymerzusammensetzungen eingesetzt:

(a) Polymerzusammensetzung gemäß Beispiel 1
(b) Phenolharz
(c) Cyanatester-Harz
(d) Epoxidharz (Laminierharz Larit® L 305 der Fa. Lange + Ritter GmbH)

Die Polymerzusammensetzung gemäß Beispiel 1 zeigt gegenüber dem Stand der Technik (Proben (b) bis (d)) eine höhere Zugverformung.

**Beispiel 3 (Vergleichsbeispiel)**

14,05 g 1,2-Phenylenbisoxazolin, 13,66 g Phenolharz Durez® 33100 und 0,28 g Triphenylphosphit werden 12 Min. in einer Brabenderknetkammer bei 164 - 167°C bei 50 UpM gemischt. Eine Teilmenge des Brabenderkneteraustrages wird in einem Reagenzglas in einem Ölbad 4h / 250°C konditioniert (dient der Aushärtung der Polymerzusammensetzung). Anschließend wird dieses Materials einer isothermen TGA (DIN 51006) 4h / 360°C unterworfen. Der Masseverlust beträgt 27,6 %.

**Beispiel 4 (erfindungsgemäß)**

14,0 g 1,2-Phenylenbisoxazolin, 13,6 g Phenolharz Durez® 33100, 0,28 g Triphenylphophit , 0,07 g RALOX® LC und 0,14 g CYASORB® UV-3346 Light Stabilizer werden 7 Min. bei 160°C mit 50 UpM in einer Brabenderknetkammer gemischt. Eine Teilmenge des Brabenderkneteraustrages wird in einem Reagenzglas in einem Ölbad 4 h / 250°C konditioniert (dient der Aushärtung der Polymerzusammensetzung). Anschließend wird dieses Materials einer isothermen TGA (DIN 51006) 4h / 360°C unterworfen. Der Masseverlust beträgt 24,9 %.

**Beispiel 5 (erfindungsgemäß)**

Eine Polymerzusammensetzung gemäß Beispiel 1 wurde unter Zusatz von 0,5 Gew.-% CYASORB® UV-3346 Light Stabilizer und 0, 25 Gew.-% RALOX® LC hergestellt. Die Messung der Viskosität (Kegel-Platte-Viskosimeter nach DIN 53019-1) nach 300 s bei 160 °C betrug 1808 mPas.

**Beispiel 6 (erfindungsgemäß)**

95 Gewichtsteile der Polymerzusammensetzung gemäß Beispiel 5 werden mit 5 Gewichtsteilen ARALDIT® LY 1135-1 A Harz gemischt. Die Messung der Viskosität (Kegel-Platte-Viskosimeter nach DIN 53019-1) nach 300 s bei 160°C betrug 11942 mPas. Die Verarbeitungsviskosität lässt sich somit durch Epoxidharzzusatz gezielt beeinflussen.

**Patentansprüche**

**1.** Polymerzusammensetzung,
umfassend eine oder mehrere Verbindungen gemäß der Struktur (A1)

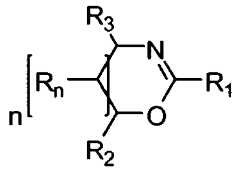

(A1)

mit

$R_1$ = unsubstituierte Alkylgruppe mit 1 bis 6 C-Atomen,
$R_2$, $R_3$, $R_n$ = Wasserstoff, und/oder unsubstituierte Alkylgruppen mit 1 bis 6 C-Atomen ,
n = 0, 1, 2, 3,

oder
eine oder mehrere Verbindungen gemäß der Struktur (A2)

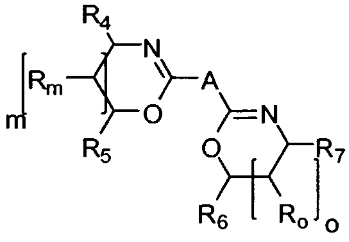

(A2)

mit

A = unsubstituiertes Alkylen mit 1 bis 6 C-Atomen oder unsubstituiertes Phenylen,

$R_4$, $R_5$, $R_6$, $R_7$, $R_m$, $R_o$ = Wasserstoff, und/oder unsubstituierte Alkylgruppen mit 1 bis 6 C-Atomen,
m, o = 0, 1, 2, 3,

oder Mischungen aus einer oder mehreren Verbindungen gemäß der Struktur (A1) und (A2), wobei die Substituenten vom Typ $R_1$, $R_2$, $R_3$, $R_4$, $R_5$, $R_6$, $R_7$, $R_n$, $R_m$ und $R_o$ gleich oder verschieden sein können und m und o gleich oder verschieden sein kann,
zumindest ein Phenolharz (B),
zumindest einen Stabilisator (C), ausgewählt aus Verbindungen gemäß den folgenden Strukturen (2) bis (5)

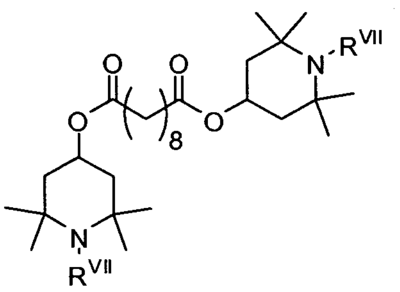

(2)

mit $R^{VII}$ = Wasserstoff, Alkyl- oder Alkoxygruppe,

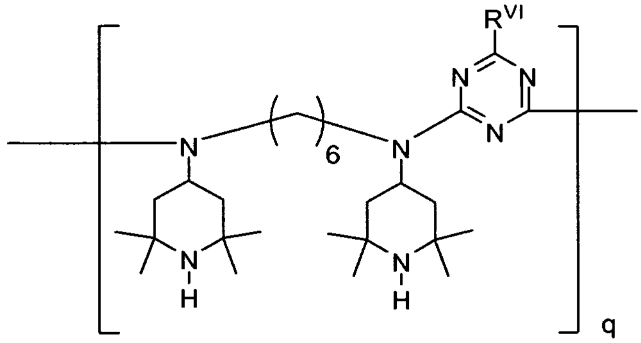

(3)

mit

$R^{VI}$ = 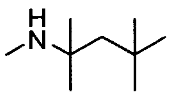 , 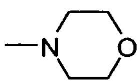 oder 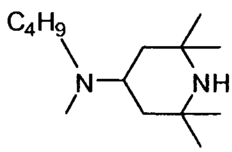

q = 2 bis 10

oder

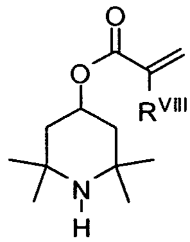

(4)

mit $R^{VIII}$ = Wasserstoff oder Alkylgruppe.
oder
eine Polymer-bound-HALS-Verbindung gemäß der folgenden Struktur

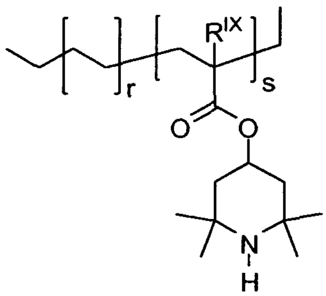

(5)

mit $R^{ix}$= Wasserstoff oder Alkylgruppe $r,s \geq 10$
und Antioxidantien gemäß Struktur (7),

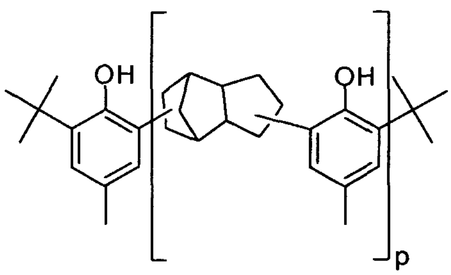

(7)

mit p = 1 bis 5,
aufweist.

**2.** Polymerzusammensetzung gemäß Anspruch 1,
**dadurch gekennzeichnet,**
**dass** die Mischung (A) aus 100 Gew.-% an Verbindungen gemäß der Struktur (A2) besteht, wobei m und o vorzugsweise 0 oder 1 sind.

**3.** Polymerzusammensetzung gemäß Anspruch 1 oder 2,
**dadurch gekennzeichnet,**
**dass** die Mischung (A) Verbindungen gemäß der Struktur (A2) mit m ≠ o innerhalb derselben Verbindung (A2u) und/oder Verbindungen gemäß der Struktur (A2) mit m = o innerhalb derselben Verbindung (A2g) aufweist.

**4.** Polymerzusammensetzung gemäß Anspruch 3,
**dadurch gekennzeichnet,**
**dass** die Mischung (A) sowohl Verbindungen gemäß der Struktur (A2) mit m und o = 1 innerhalb derselben Verbindung (A2g6) als auch Verbindungen gemäß der Struktur (A2) mit m und o = 0 innerhalb derselben Verbindung (A2g5) aufweist.

**5.** Polymerzusammensetzung gemäß Anspruch 4,
**dadurch gekennzeichnet,**
**dass** die Mischung (A)

30 bis 70 Gew.-% an Verbindungen der Struktur (A2g6) und
70 bis 30 Gew.-% an Verbindungen der Struktur (A2g5),

aufweist.

**6.** Polymerzusammensetzung gemäß zumindest einem der Ansprüche 1 bis 5,
**dadurch gekennzeichnet,**
**dass** die Polymerzusammensetzung die Stabilisatoren (C) in einer Menge von 0,1 bis 2 Gew.-% bezogen auf die Polymerzusammensetzung aufweist.

**7.** Polymerzusammensetzung gemäß zumindest einem der Ansprüche 1 bis 6,
**dadurch gekennzeichnet,**
**dass** diese zumindest einen Entlüfter aufweist.

**8.** Polymerzusammensetzung gemäß Anspruch 7,
**dadurch gekennzeichnet,**
**dass** die Polymerzusammensetzung als Entlüfter Silikonöle oder silikonmodifizierte Polyglycole und Polyether, schaumzerstörende Polysiloxane oder Polymere, polyethermodifizierte Polymethylalkylsiloxane aufweist.

**9.** Polymerzusammensetzung gemäß zumindest einem der Ansprüche 1 bis 8,
**dadurch gekennzeichnet,**
**dass** diese zumindest ein Trennmittel aufweist.

## Claims

**1.** Polymer composition comprising one or more components having the structure (A1)

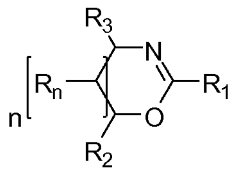

(A1)

where $R_1$ = unsubstituted alkyl group having from 1 to 6 carbon atoms,
$R_2$, $R_3$, $R_n$ = hydrogen, and/or unsubstituted alkyl groups having from 1 to 6 carbon atoms,
n = 0, 1, 2, 3,
or
one or more compounds having the structure (A2)

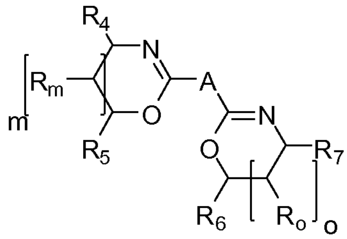

(A2)

where A = unsubstituted alkylene having from 1 t o 6 carbon atoms or unsubstituted phenylene,
$R_4$, $R_5$, $R_6$, $R_7$, $R_m$, $R_o$ = hydrogen, and/or unsubstituted alkyl groups having from 1 to 6 carbon atoms,
m, o = 0, 1, 2, 3,
or mixtures of one or more compounds having the structure (A1) and (A2),
where the substituents of the type $R_1$, $R_2$, $R_3$, $R_4$, $R_5$, $R_6$, $R_7$, $R_n$, $R_m$ and $R_o$ can be identical or different and m and o can be identical or different,
at least one phenolic resin (B),
at least one stabilizer (C) selected from among compounds having the following structures (2) to (5)

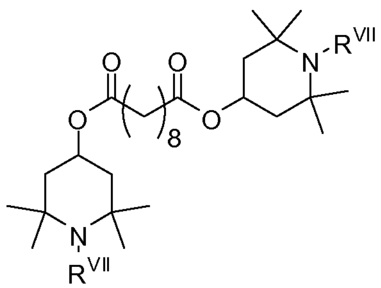

(2)

where $R^{VII}$ = hydrogen, alkyl or alkoxy group,

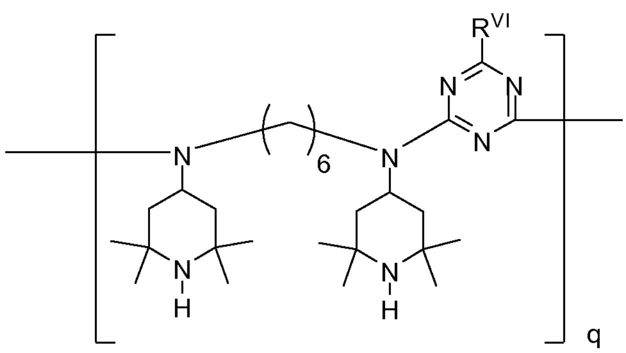

(3)

where $R^{VI}$ =

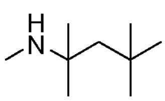 , 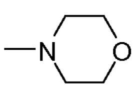 or 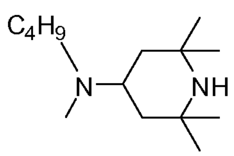

q = 2 to 10
or

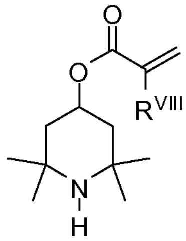

(4)

where $R^{VIII}$ = hydrogen or alkyl group,
or
a polymer-bound HALS compound having the following structure

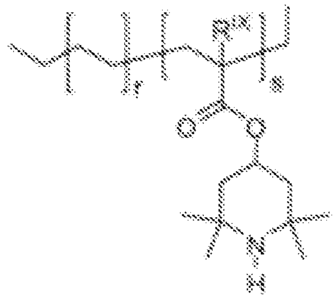

(5)

where $R^{ix}$ = hydrogen or alkyl group r, s ≥ 10 and antioxidants having the structure (7),

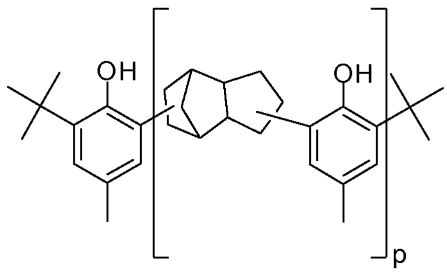

(7)

where p = 1 to 5.

2. Polymer composition according to claim 1, **characterized in that** the mixture (A) consists of 100% by weight of compounds having the structure (A2) in which m and o are preferably 0 or 1.

3. Polymer composition according to claim 1 or 2, **characterized in that** the mixture (A) comprises compounds having the structure (A2) in which m ≠ o within the same compound (A2u) and/or compounds having the structure (A2) in which m = o within the same compound (A2g).

4. Polymer composition according to claim 3, **characterized in that** the mixture (A) comprises both compounds having the structure (A2) in which m and o = 1 within the same compound (A2g6) and compounds having the structure (A2) in which m and o = 0 within the same compound (A2g5).

5. Polymer composition according to claim 4, **characterized in that** the mixture (A) comprises
from 30 to 70% by weight of compounds of the structure (A2g6) and
from 70 to 30% by weight of compounds of the structure (A2g5).

6. Polymer composition according to at least one of claims 1 to 5, **characterized in that** the polymer composition contains the stabilizers (C) in an amount of from 0.1 to 2% by weight based on the polymer composition.

7. Polymer composition according to at least one of claims 1 to 6, **characterized in that** this comprises at least one deaerator.

8. Polymer composition according to claim 7, **characterized in that** the polymer composition comprises silicone oils or silicone-modified polyglycols and polyethers, foam-destroying polysiloxanes or polymers, polyether-modified polymethylalkylsiloxanes as deaerators.

9. Polymer composition according to at least one of claims 1 to 8, **characterized in that** this comprises at least one mould release agent.

**Revendications**

1. Composition de polymère,
comprenant un ou plusieurs composés conformes à la structure (A1)

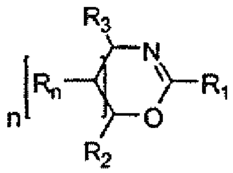
(A1)

où

$R_1$ représente un groupe alkyle non substitué ayant de 1 à 6 atomes de carbone,
$R_2$, $R_3$, $R_n$ représentent un atome d'hydrogène et/ou des groupes alkyle non substitués ayant de 1 à 6 atomes de carbone,
n = 0, 1, 2, 3,

ou
un ou plusieurs composés conformes à la structure (A2)

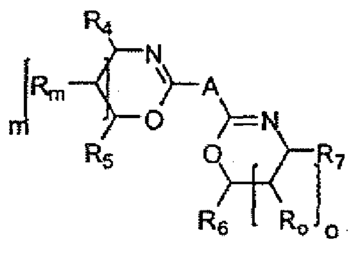
(A2)

où

A représente un groupe alkylène non substitué ayant de 1 à 6 atomes de carbone ou un groupe phénylène non substitué,
$R_4$, $R_5$, $R_6$, $R_7$, $R_m$, $R_o$ représentent un atome d'hydrogène et/ou des groupes alkyle non substitués ayant de 1 à 6 atomes de carbone,

m, o = 0, 1, 2, 3,

ou des mélanges d'un ou plusieurs conformes à la structure (A1) et la structure (A2), les substituants du type R1, R2, R3, R4, R5, R6, R7, Rn, Rm et Ro pouvant être identiques ou différents et m et o pouvant être identiques ou différents,

au moins une résine phénolique (B),

au moins un stabilisant (C), choisi parmi des composés conformes aux structures (2) à (5) suivantes

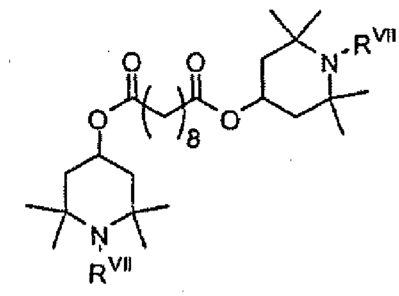

(2)

où

$R^{VII}$ représente un atome d'hydrogène, un groupe alkyle ou alcoxy,

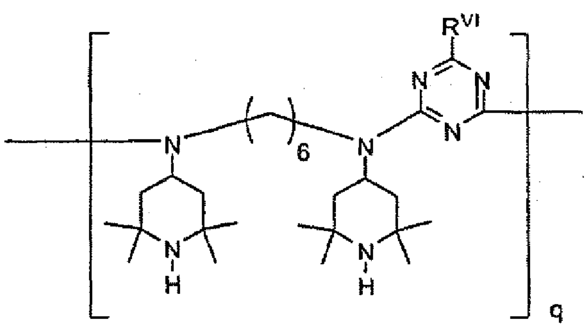

(3)

où $R^{VI}$ =

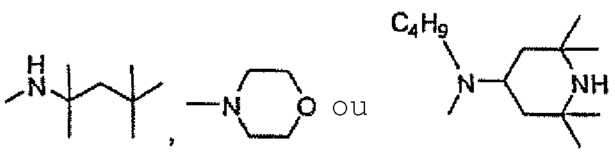

q = 2 à 10

ou

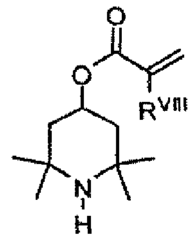

(4)

où

$R^{VIII}$ représente un atome d'hydrogène ou un groupe alkyle,

ou
un composé HALS lié à un polymère, conforme à la structure suivante

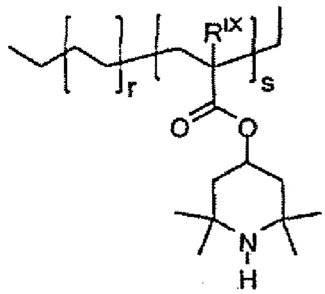

(5)

où

$R^{ix}$ représente un atome d'hydrogène ou un groupe alkyle, r, s ≥ 10

et des antioxydants conformes à la structure (7),

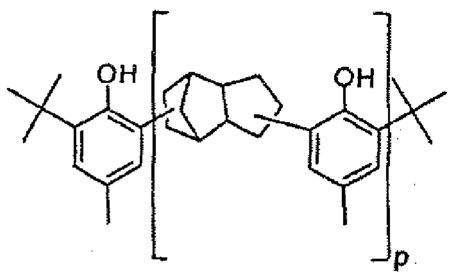

(7)

où p = 1 à 5.

2. Composition de polymère selon la revendication 1, **caractérisée en ce que** le mélange (A) consiste en 100 % en poids de composés conformes à la structure (A2), m et o étant de préférence 0 ou 1.

3. Composition de polymère selon la revendication 1 ou 2, **caractérisée en ce que** le mélange (A) comporte des composés conformes à la structure (A2) avec m ≠ o dans le même composé (A2u) et/ou des composés conformes à la structure (A2) avec m = 0 dans le même composé (A2g).

4. Composition de polymère selon la revendication 3, **caractérisée en ce que** le mélange (A) comporte aussi bien des composés conformes à la structure (A2) avec m et o = 1 dans le même composé (A2g6) que des composés

conformes à la structure (A2) avec m et o = 0 dans le même composé (A2g5).

**5.** Composition de polymère selon la revendication 4, **caractérisée en ce que** le mélange (A) comporte
30 à 70 % en poids de composés de structure (A2g6) et
70 à 30 % en poids de composés de structure (A2g5).

**6.** Composition de polymère selon au moins l'une des revendications 1 à 5, **caractérisée en ce que** la composition de polymère comporte les stabilisants (C) en une quantité de 0,1 à 2 % en poids, par rapport à la composition de polymère.

**7.** Composition de polymère selon au moins l'une des revendications 1 à 6, **caractérisée en ce qu'**elle comporte au moins un agent de désaération.

**8.** Composition de polymère selon la revendication 7, **caractérisée en ce que** la composition de polymère comporte en tant qu'agent de désaération des huiles de silicone ou des polyéthers et polyglycols modifiés par des silicones, des polymères ou polysiloxanes brise-mousses, des polyméthylalkylsiloxanes modifiés par des polyéthers.

**9.** Composition de polymère selon au moins l'une des revendications 1 à 8, **caractérisée en ce qu'**elle comporte au moins un agent de démoulage.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4699970 A, Tiba
- EP 0284880 A2
- US 5302687 A, Culbertson
- US 4806267 A
- US 5644006 A
- EP 0758351 B1
- US 5616659 A
- WO 9805699 A
- EP 0063544 A1


### In der Beschreibung aufgeführte Nicht-Patentliteratur


- **E. A. Boulter et al.** Electrical Insulation Conference. *Electrical Manufacturing & Coil Winding Conference Proceedings,* 1997, vol. 22-25, 249-253
- *Prog. Polym. Sci.,* 2002, vol. 27, 579-626
- *Mat. Tech.,* vol. 11.6, 215-229